# EUROPEAN PATENT APPLICATION

(11) **EP 4 495 446 A1**
(43) Date of publication of application: **22.01.2025**
(21) Application number: 23835487.2
(22) Date of filing: 03.07.2023
(51) Int. Cl.: F16C 27/02

(54) **RADIAL FOIL BEARING**

(30) Priority: 04.07.2022 JP 2022107845
(71) Applicant: IHI Corporation, Tokyo 135-8710 (JP)
(72) Inventor: KOBAYASHI Hiroki, Tokyo 135-8710 (JP); TANAKA Ryuuta, Tokyo 135-8710 (JP); NAKAJIMA Masahiro, Tokyo 135-8710 (JP)
(74) Representative: TBK
(86) International application number: PCT/JP2023/024634
(87) International publication number: WO 2024/009955

(57) **Abstract**

A radial foil bearing, which surrounds a rotation axis and supports the rotation axis, includes a bearing housing, an insertion hole which is formed in the bearing housing and through which the rotation axis is inserted, a groove provided in the inner peripheral surface of the insertion hole and recessed toward the radially outer side, a pin hole base end side having an opening formed in the groove and extending to the outer peripheral surface of the bearing housing, a restricting pin that is inserted into the pin hole base end side and that passes through the groove, and a top foil disposed in the insertion hole. The groove is formed so as to reach an axial end surface of the bearing housing, a circumferential end part of the top foil is disposed in the groove, and the restricting pin intersects with the inner side surface of the groove at multiple locations.

## Description

### Technical Field

The present disclosure relates to a radial foil bearing.

### Background Art

Conventionally, as a technology in such a field, a radial foil bearing described in Patent Literature 1 described below is known. In this radial foil bearing, an insertion hole through which a rotation axis is inserted is provided in a bearing case, and a ring foil is installed in a gap between an outer peripheral surface of the rotation axis and an inner peripheral surface of the insertion hole. A plurality of protrusions protruding to the axially outer side is provided on the outer peripheral surface of the ring foil, and a plurality of grooves into which the protrusions are fitted is provided on the inner peripheral surface of the insertion hole. A through hole penetrating to the outer peripheral surface of the bearing case is provided in the groove, a stopper pin is inserted through the through hole, and the stopper pin is engaged with a notch formed in the protrusion to fix the ring foil to the bearing case.

### Citation List

### Patent Literature

Patent Literature 1: WO 2019-049353 A

### Summary of Invention

### Technical Problem

In a method for attaching a foil of a radial foil bearing as described above, it is desired to further improve ease of assembly. The present disclosure describes a radial foil bearing that is easy to assemble.

### Solution to Problem

A radial foil bearing according to one aspect of the present disclosure is a radial foil bearing which surrounds a rotation axis and supports the rotation axis, the radial foil bearing including a bearing housing, an insertion hole formed in the bearing housing and through which the rotation axis is inserted, a groove provided in the inner peripheral surface of the insertion hole, a through hole having an opening formed in the groove and extending to the outer peripheral surface of the bearing housing, a restricting pin inserted into the through hole and also extending into the groove, and a top foil disposed in the insertion hole, in which the groove is formed so as to reach an axial end surface of the bearing housing, a circumferential end part of the top foil is disposed in the groove, and the restricting pin intersects or contacts with the inner side surface of the groove at multiple locations.

### Effects of Invention

According to the present disclosure, it is possible to provide a radial foil bearing that is easy to assemble.

### Brief Description of Drawings

FIG. 1 is a side view illustrating a main part of a rotating machine to which a radial foil bearing of the present embodiment is applied.
FIG. 2(a) is a front view illustrating the radial foil bearing of a first embodiment as viewed from the axial direction, and FIG. 2(b) is a partially broken side view illustrating the radial foil bearing in a partially broken manner.
FIG. 3 is an enlarged front view illustrating a bearing foil and the like.
FIG. 4(a) is a development view illustrating a state where the bearing foil is developed on a plane, and FIG. 4(b) is a perspective view illustrating both end parts of the bearing foil.
FIG. 5(a) is a side view of a radial foil bearing according to a second embodiment, and FIG. 5(b) is a perspective view illustrating both end parts of the bearing foil.
FIG. 6(a) is a side view of a radial foil bearing according to a third embodiment, and FIG. 6(b) is a perspective view illustrating both end parts of the bearing foil.
FIG. 7(a) is a side view of a radial foil bearing according to a fourth embodiment, and FIG. 7(b) is a perspective view illustrating both end parts of the bearing foil.
FIGS. 8(a), 8(b), and 8(c) are front views illustrating radial foil bearings of fifth, sixth, and seventh embodiments, respectively, as viewed from the axial direction.
FIGS. 9(a) and 9(b) are front views illustrating radial foil bearings of eighth and ninth embodiments, respectively, as viewed from the axial direction.
FIG. 10(a) is a development view illustrating a state where a bearing foil according to a modification is developed on a plane, and FIG. 10(b) is a perspective view illustrating both end parts of the bearing foil.

### Description of Embodiments

A radial foil bearing according to one aspect of the present disclosure is a radial foil bearing which surrounds a rotation axis and supports the rotation axis, the radial foil bearing including a bearing housing, an insertion hole formed in the bearing housing and through which the rotation axis is inserted, a groove provided in the inner peripheral surface of the insertion hole, a through hole having an opening formed in the groove and extending to the outer peripheral surface of the bearing housing, a restricting pin inserted into the through hole and also extending into the groove, and a top foil disposed in the insertion hole, in which the groove is formed so as to reach an axial end surface of the bearing housing, a circumferential end part of the top foil is disposed in the groove, and the restricting pin intersects or contacts with the inner side surface of the groove at multiple locations.

A pair of the restricting pins may be disposed so as to sandwich the end part of the top foil in an extending direction of the groove. In addition, the restricting pin may pass through a hole provided at the end part of the top foil in the groove, and the top foil may be installed in a state where displacement corresponding to a dimensional difference between the restricting pin and the hole is possible.

The restricting pin may penetrate the end part of the top foil in the groove. One end of the restricting pin may be screwed into a female screw hole provided in the inner side surface of the groove. The restricting pin may pass through the groove and extend so that both ends thereof protrude to outside of the bearing housing, and the both ends of the restricting pin may be provided with come-off prevention portions that restrict displacement of come-off direction from the bearing housing. The restricting pin and the end part of the top foil may overlap as viewed in the extending direction of the groove.

Hereinafter, embodiments of the radial foil bearing according to the present disclosure will be described in detail with reference to the drawings. Hereinafter, the same or equivalent components will be denoted by the same reference signs, and redundant description will be omitted. In the drawings, the features of the parts may be exaggeratedly illustrated, and the dimensional ratios of the parts in the drawings do not necessarily coincide with the actual parts, and do not necessarily coincide with each other in the drawings.

### (First Embodiment)

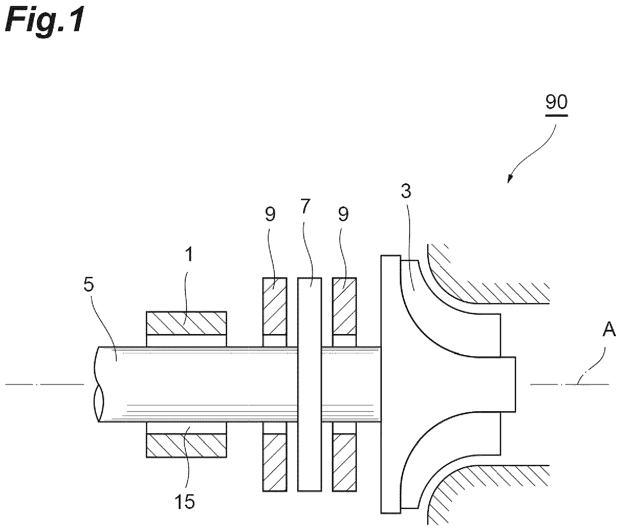

FIG. 1 is a side view illustrating a main part of a rotating machine 90 to which a radial foil bearing 1 of the present embodiment is applied. The radial foil bearing 1 is used as a radial bearing of a rotation axis 5 of an impeller 3 of the rotating machine 90. Examples of such a rotating machine 90 include a turbine, a compressor, a supercharger, and the like. Note that, the radial foil bearing 1 of the present embodiment is not limited to a bearing of an impeller rotation axis, and can also be used as a bearing of a rotation axis of an electric motor, a generator or the like. In the description of the radial foil bearing 1, the terms "axial direction", "radial direction", and "circumferential direction" simply mean the axial direction, the radial direction, and the circumferential direction of the rotation axis 5 in a use state in the rotating machine 90.

The rotating machine 90 includes the rotation axis 5 that rotates about a rotation axis line A and the impeller 3 provided at the tip of the rotation axis 5. A thrust collar 7 is provided on the rotation axis 5, and a pair of thrust bearings 9 and 9 are provided on the casing side of the rotating machine 90 so as to sandwich the thrust collar 7 in the axial direction. The radial foil bearing 1 is disposed at a position farther from the impeller 3 than the thrust bearings 9 and 9. The radial foil bearing 1 is attached to the casing side of the rotating machine 90 so as to surround the rotation axis 5, and supports the rotation axis 5.

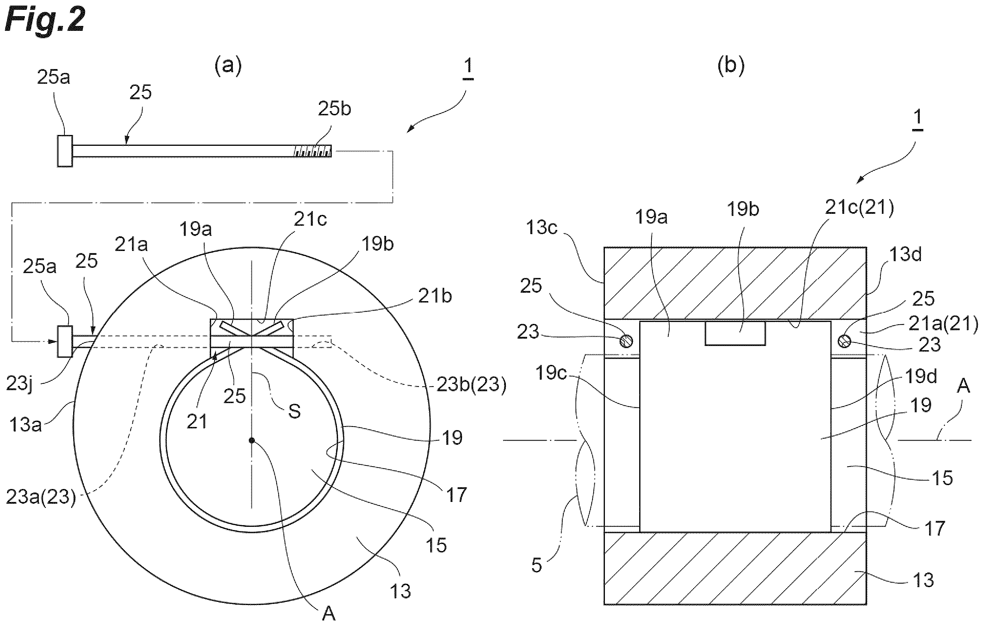

FIG. 2(a) is a front view illustrating the radial foil bearing 1 as viewed from the axial direction, and FIG. 2(b) is a partially broken side view illustrating a bearing housing 13 or the like of the radial foil bearing 1 in a partially broken manner. As illustrated in the drawing, the radial foil bearing 1 includes the bearing housing 13 having a circular shape. Note that, it is not essential that the bearing housing 13 has a circular shape. An insertion hole 15 through which the rotation axis 5 is inserted is formed in a central portion of the bearing housing 13. The insertion hole 15 has a circular shape centered on the rotation axis line A as viewed from the axial direction, and penetrates the bearing housing 13 in the axial direction. The radial foil bearing 1 also includes a bearing foil 19. The bearing foil 19 is disposed along an inner peripheral surface 17 of the insertion hole 15. In a gap between the outer peripheral surface of the rotation axis 5 inserted into the insertion hole 15 and the inner peripheral surface 17 of the insertion hole 15, the bearing foil 19 extends in the circumferential direction over substantially the entire circumference.

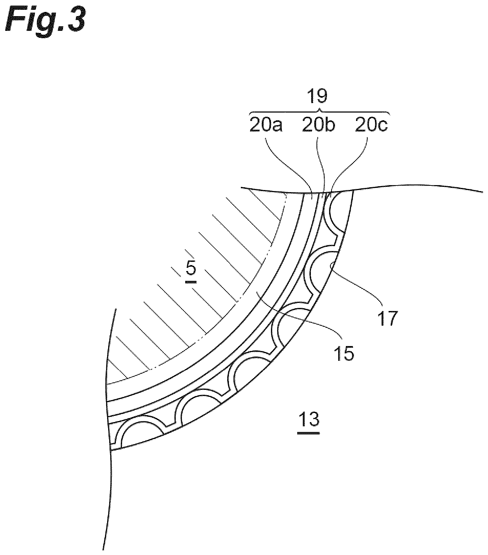

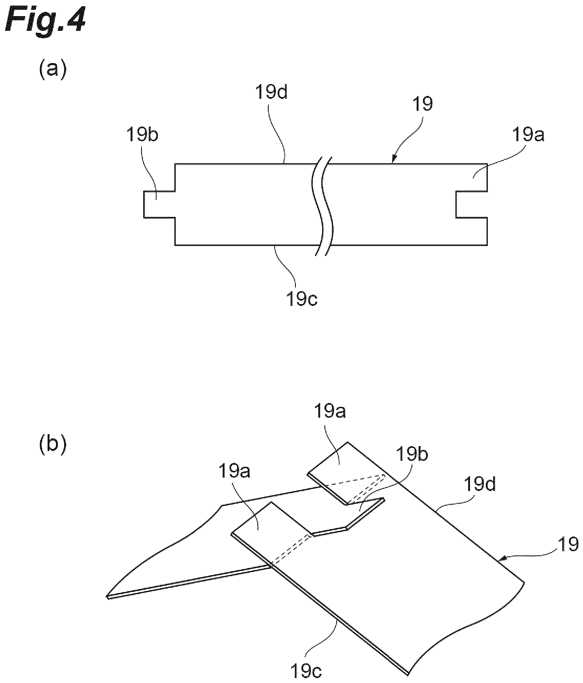

FIG. 3 is an enlarged front view illustrating the inner peripheral surface 17 of the insertion hole 15 and the bearing foil 19 on the inner peripheral surface 17. FIG. 4(a) is a development view illustrating a state where the bearing foil 19 is developed on a plane, and FIG. 4(b) is a perspective view illustrating both end parts 19a and 19b of the bearing foil 19. As illustrated in FIG. 3, the bearing foil 19 includes a top foil 20a, an intermediate foil 20b, and a back foil 20c that are stacked in order from the inner peripheral side. The top foil 20a is a tabular metal thin plate facing the outer peripheral surface of the rotation axis 5 with a slight gap, and forms a fluid film that supports the rotation axis 5 by drawing a fluid into the gap. The back foil 20c is a corrugated metal thin plate, and elastically supports the intermediate foil 20b and the top foil 20a by a so-called bump foil structure. The intermediate foil 20b is a tabular metal thin plate disposed between the top foil 20a and the back foil 20c.

In FIG. 2(a), in order to avoid complication of the drawing, the bearing foil 19 is illustrated as a single metal thin plate, but in practice, the three foils 20a, 20b, and 20c as described above have the same plane development shape illustrated in FIG. 4(a) and are overlapped with each other in the thickness direction, thereby forming the bearing foil 19. That is, the bearing foil 19 illustrated in FIG. 4(a) is formed by overlapping three foils 20a, 20b, and 20c (FIG. 3) having the same plane development shape in the depth direction of the paper surface. In the drawings after FIG. 4, in order to avoid complication of the drawings, the bearing foil 19 is illustrated as a single metal thin plate similarly to FIG. 2(a). In the following description, unless otherwise specified, the bearing foil 19 will be described as an integrated object like a single metal thin plate.

As illustrated in FIG. 4(a), the bearing foil 19 has a strip shape in a plane developed state. One circumferential end part 19b of the bearing foil 19 is formed in a convex shape, and the other end part 19a is formed in a concave shape corresponding to the convex shape. The strip-shaped bearing foil 19 is rolled into a cylindrical shape around the rotation axis line A so as to match the both end parts 19a and 19b, and is installed in the insertion hole 15. As a result, the bearing foil 19 extends along the inner peripheral surface 17 of the insertion hole 15 with a repulsive force due to deformation into the cylindrical shape. In addition, at this time, as illustrated in FIG. 4(b), the concave and the convex of the both end parts 19a and 19b of the bearing foil 19 engage with each other, so that the both end parts 19a and 19b intersect with each other in an X shape as viewed in the axial direction as illustrated in FIG. 2(a).

A groove 21 recessed toward the radially outer side is formed in the inner peripheral surface 17 of the insertion hole 15. The groove 21 is a bottomed rectangular groove having a depth in the radial direction and extending in the axial direction, and extends over the entire length in the axial direction of the insertion hole 15. That is, the groove 21 reaches both axial end surfaces 13c and 13d of the bearing housing 13, and the cross section of the groove 21 appears on the both axial end surfaces 13c and 13d of the bearing housing 13. The groove 21 has three inner side surfaces. One of the inner side surfaces is a groove bottom surface 21c orthogonal to the radial direction, and the other two are groove side surfaces 21a and 21b orthogonal to the groove bottom surface 21c and parallel to the rotation axis line A. The both end parts 19a and 19b of the bearing foil 19 locally return to be tabular with a repulsive force due to deformation of being rounded into a cylindrical shape, and are inserted into the groove 21 in a state of intersecting in an X shape as described above. Note that, the groove 21 of the present embodiment is recessed in a rectangular shape roughly parallel to the radial direction, but this is merely an example. For example, the groove 21 may be a groove that is inclined so as to contain a circumferential component together with a radial component and is recessed toward the outer diameter side, or the cross-sectional shape may not be necessarily rectangular, and for example, a smaller recess may be formed in a rectangular inner wall. In addition, the groove 21 of the present embodiment is parallel to the axial direction. However, the groove 21 does not necessarily extend parallel to the axial direction, and may be inclined and extend so as to contain a circumferential component together with an axial component, for example.

A mechanism for restricting the axial displacement of the bearing foil 19 installed in the insertion hole 15 as described above will be described. The bearing housing 13 is provided with two pin holes 23 and 23, and restricting pins 25 and 25 are inserted into the pin holes 23 and 23, respectively. As illustrated in FIG. 2(b), the pin holes 23 and 23 are arranged one by one at both end parts in the axial direction of the bearing housing 13, and both end parts 19a and 19b of the bearing foil 19 are located so as to be axially sandwiched between the pin holes 23 and 23.

A pin insertion port 23j of the pin hole 23 is opened in an outer peripheral surface 13a of the bearing housing 13, and the pin hole 23 is formed to linearly extend from the outer peripheral surface 13a through the groove 21. Assuming that a virtual plane including the rotation axis line A and passing through the circumferential center of the groove 21 is a "virtual plane S ", the pin hole 23 extends in a direction orthogonal to the virtual plane S and vertically penetrates the groove side surface 21a and the groove side surface 21b on the way. That is, the pin hole 23 extends in a direction intersecting with the virtual plane including the rotation axis line A and passing through the groove 21, and intersects the inner side surface of the groove 21 at two intermediate locations.

Hereinafter, a part of the pin hole 23 closer to the pin insertion port 23j than the groove side surface 21a is referred to as a "pin hole base end side 23a", and a part of the pin hole 23 closer to the tip than the groove side surface 21b is referred to as a "pin hole tip side 23b". The pin hole base end side 23a is a through hole that opens into the groove 21 on the groove side surface 21a and extends to the outer peripheral surface 13a of the bearing housing 13. In addition, the pin hole tip side 23b is a bottomed hole that opens into the groove 21 on the groove side surface 21b. In addition, the pin hole base end side 23a is a through hole, whereas the pin hole tip side 23b is a tap hole that is internally threaded. It can also be said that the pin hole tip side 23b is a female screw hole provided in the groove side surface 21b in the groove 21.

The restricting pin 25 is a rod-shaped metal member linearly extending with a diameter that can be inserted into the pin hole 23. A male screw portion 25b that can be screwed into a female screw portion on the pin hole tip side 23b is formed at least on the tip side of the restricting pin 25. Note that, the male screw portion 25b may be formed over the entire length of the restricting pin 25. In addition, a head portion 25a for hooking a tool is formed on the base end side of the restricting pin 25, and using the tool, the restricting pin 25 can be rotated around the own axis. A bolt may be employed as the restricting pin 25. When the radial foil bearing 1 is assembled, the tip side of the restricting pin 25 is inserted into the pin hole 23 from the pin insertion port 23j, and the tip of the restricting pin 25 passes through the groove 21 and reaches the pin hole tip side 23b formed in the groove side surface 21b. Then, the head portion 25a is turned by the tool outside the bearing housing 13, the male screw portion 25b of the restricting pin 25 is screwed into the pin hole tip side 23b. The tip part of the restricting pin 25 is screwed into the pin hole tip side 23b in this manner, so that the restricting pin 25 is fixed to the bearing housing 13 so as not to come off from the bearing housing 13. Note that, the presence of the head portion 25a is an example and is not essential.

It can be said that the restricting pin 25 installed in this manner intersects with the inner side surfaces 21a to 21c of the groove 21 at multiple locations as viewed in the axial direction. More specifically, the restricting pin 25 intersects with the inner side surfaces 21a to 21c at total two locations of one location of the groove side surface 21a and one location of the groove side surface 21b. In addition, as viewed in the extending direction (axial direction) of the groove 21 as illustrated in FIG. 2(a), the restricting pin 25 overlaps both end parts 19a and 19b of the bearing foil 19 in the groove 21. Assuming that a virtual plane including the rotation axis line A and passing through the circumferential center of the groove 21 is a "virtual plane S ", it can be sad that the restricting pin 25 extends in a direction intersecting with the virtual plane S and passes through the groove 21. More specifically, the restricting pin 25 extends in a direction orthogonal to the virtual plane S. In addition, as viewed in the extending direction of the restricting pin 25 as illustrated in FIG. 2(b), the two restricting pins 25 and 25 are located outside both axial end parts 19c and 19d of the bearing foil 19, respectively.

As described above, the two restricting pins 25 and 25 are located so as to sandwich the both end parts 19a and 19b in the axial direction, and as viewed in the extending direction (axial direction) of the groove 21, the restricting pin 25 overlaps the both end parts 19a and 19b of the bearing foil 19 in the groove 21. With this arrangement, when the bearing foil 19 attempts to be displaced in the axial direction in the insertion hole 15, the both end parts 19a and 19b interfere with the restricting pin 25 and the displacement is prevented. That is, the axial displacement of the bearing foil 19 in the insertion hole 15 is restricted by the presence of the restricting pin 25. Note that, a part of the top foil 20a accommodated in the groove 21 is included in the both end parts 19a and 19b accommodated in the groove 21, and the both end parts 19a and 19b extend to the radially outer side from the restricting pin 25. That is, as viewed in the axial direction, a part of the top foil 20a protrudes to the radially outer side from the restricting pin 25 in the groove 21.

Note that, in order to obtain the effect of frictional damping, only slight axial displacement of the restricting pin 25 may be possible. That is, spacing between the two restricting pins 25 may be slightly wider than the axial width of the part of the top foil 20a accommodated in the groove 21. Alternatively, the top foil 20a may be accommodated in the groove 21 so as to be separated from at least one of the two restricting pins 25.

In addition, in the present embodiment, the part of the top foil 20a accommodated in the groove 21 is not fixed to the groove 21. Therefore, the part of the top foil 20a accommodated in the groove 21 can be displaced or deformed in the groove 21, which contributes to improvement of damping performance of the radial foil bearing 1.

In the radial foil bearing 1 configured as described above, a regulating portion of axial displacement of the bearing foil 19 including the top foil 20a, the intermediate foil 20b, and the back foil 20c is realized by component parts such as the two restricting pins 25 and 25. In addition, the regulating portion of axial displacement of the bearing foil 19 is assembled by a relatively simple procedure in which the restricting pins 25 and 25 are inserted from the outside of the bearing housing 13 toward a direction intersecting with the above-described virtual plane S in the groove 21 and installed, after the strip-shaped bearing foil 19 is rounded and installed in the insertion hole 15. Thus, according to the configuration of the radial foil bearing 1, the radial foil bearing can be easily assembled.

Hereinafter, second to eighth embodiments of the radial foil bearing will be described. The radial foil bearings of the following second to eighth embodiments can also provide the similar operational effects as those of the above-described first embodiment. In the following description of each embodiment, differences from other embodiments including the first embodiment will be mainly described.

### (Second Embodiment)

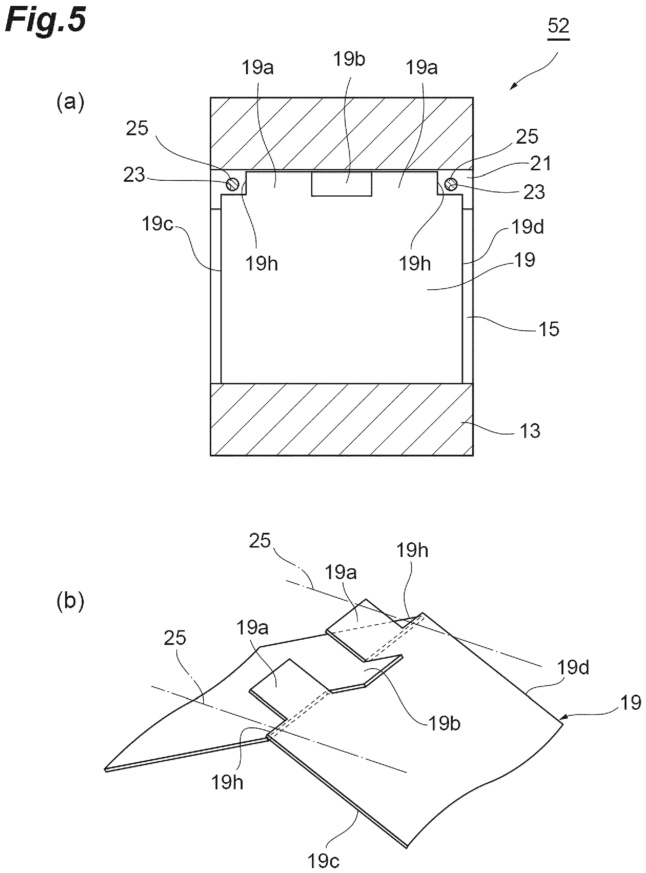

FIG. 5(a) is a side view of a radial foil bearing 52 according to a second embodiment. The first embodiment and the present embodiment are different in that, the two restricting pins 25 and 25 are located outside the both axial end parts 19c and 19d of the bearing foil 19, respectively in the radial foil bearing 1 according to the first embodiment, whereas the two restricting pins 25 and 25 are located inside the both axial end parts 19c and 19d of the bearing foil 19, respectively in the radial foil bearing 52 according to the present embodiment. In order to enable such a positional relationship, as illustrated in FIG. 5(b), the circumferential end parts 19a of the bearing foil 19 are formed with rectangular notches 19h and 19h at corner positions intersecting with the axial end parts 19c and 19d, respectively. Then, as indicated by a dashed-dot line in the drawing, the restricting pins 25 and 25 pass through the notches 19h and 19h. The bearing foil 19 avoids interference with the restricting pins 25 and 25 by the notches 19h and 19h in this manner, so that the axial end parts 19c and 19d of the bearing foil 19 protrude outward from the restricting pins 25 and 25.

### (Third Embodiment)

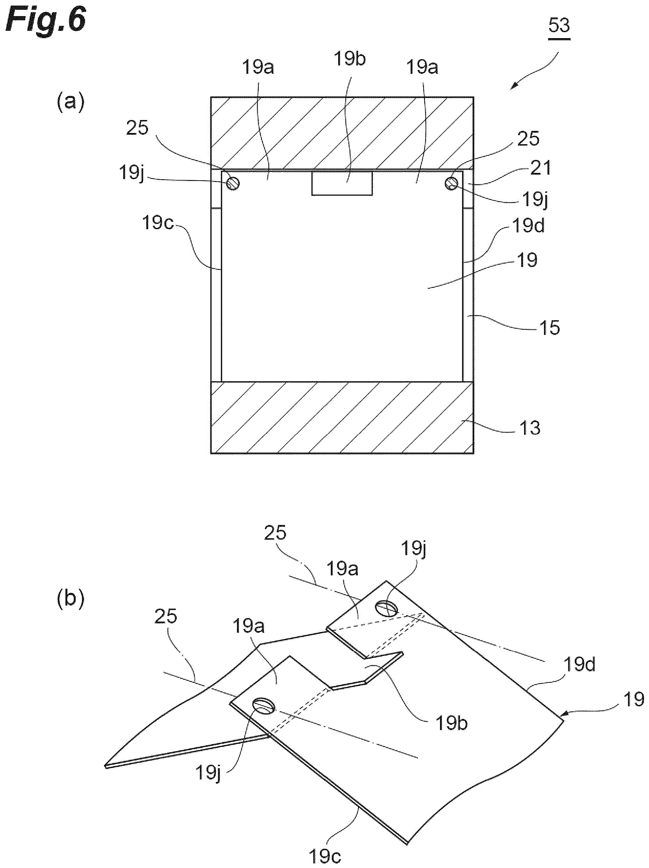

As illustrated in FIGS. 6(a) and 6(b), in a radial foil bearing 53 according to a third embodiment, instead of the notches 19h and 19h in the second embodiment, holes 19j and 19j are each formed in the circumferential end part 19a of the bearing foil 19, and as indicated by dashed lines in the drawing, the restricting pins 25 and 25 pass through the holes 19j and 19j.

As viewed from the extending direction of the restricting pin 25, the diameter of the hole 19j is slightly larger than the diameter of the restricting pin 25, and there is a slight gap between the inner edge of the hole 19j and the outer peripheral surface of the restricting pin 25. Thus, axial, radial, and circumferential displacement of the bearing foil 19 is not completely prevented by the restricting pin 25. That is, the bearing foil 19 is installed in a state where displacement corresponding to a dimensional difference between the restricting pin 25 and the hole 19j is possible, that is, the part of the top foil 20a accommodated in the groove 21 is not fixed to the groove 21. Therefore, the part of the top foil 20a accommodated in the groove 21 can be displaced or deformed in the groove 21.

### (Fourth Embodiment)

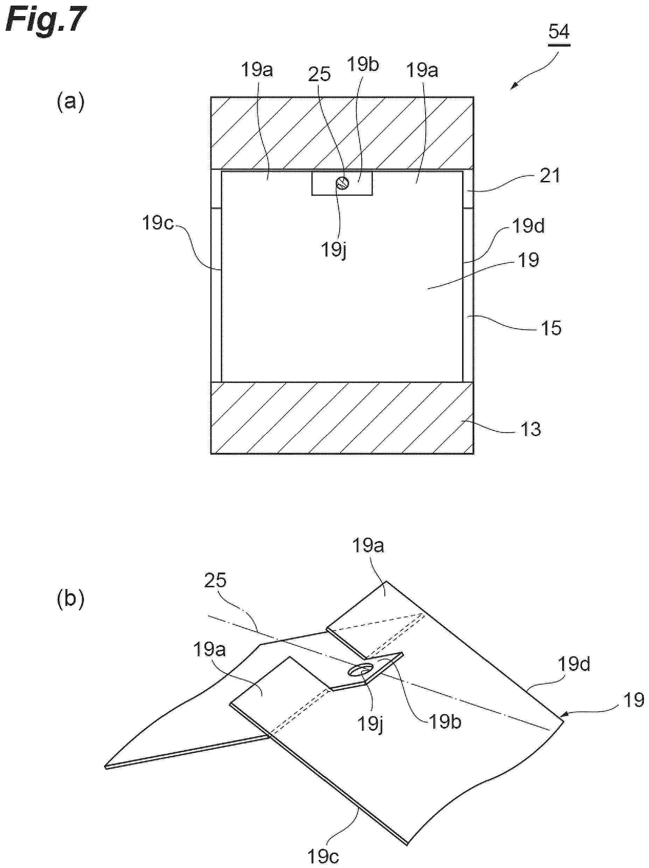

As illustrated in FIGS. 7(a) and 7(b), in a radial foil bearing 54 according to a fourth embodiment, the two restricting pins 25 and 25 in the third embodiment are reduced to one and moved to the axial center portion of the bearing housing 13. Correspondingly, the hole 19j is similarly moved to the axial center portion of the bearing foil 19, and the restricting pin 25 passes through the hole 19j.

Also in the present embodiment, similarly to the above-described third embodiment, the bearing foil 19 is installed in a state where displacement corresponding to a dimensional difference between the restricting pin 25 and the hole 19j is possible.

### (Fifth Embodiment)

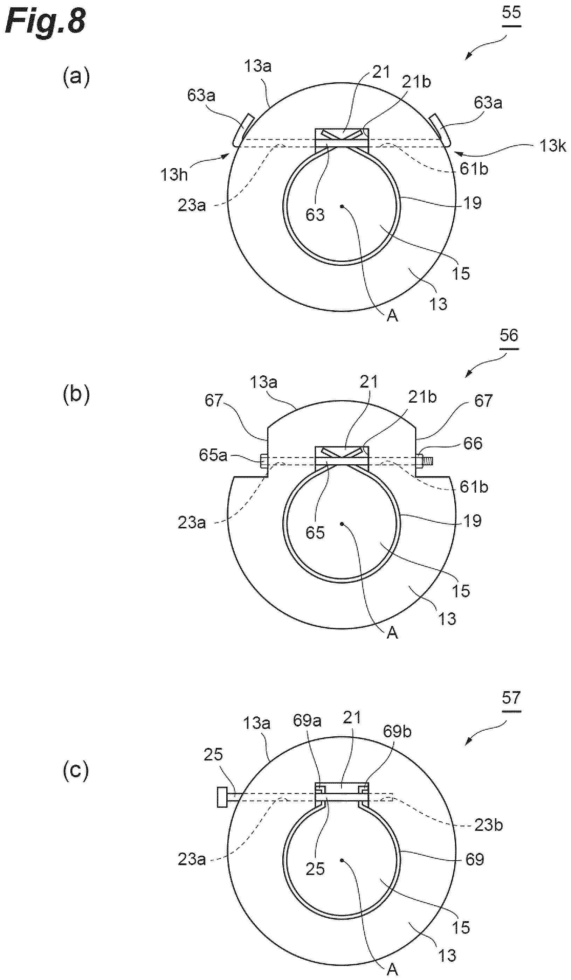

As illustrated in FIG. 8(a), a radial foil bearing 55 according to a fifth embodiment includes a pin hole tip side 61b instead of the pin hole tip side 23b which is a bottomed tap hole in the first embodiment. The pin hole tip side 61b is a through hole that opens into the groove 21 on the groove side surface 21b and extends to the outer peripheral surface 13a of the bearing housing 13. Correspondingly, a restricting pin 63 extends so that both end parts each protrude from one location 13h and the other location 13k on the outer peripheral surface 13a of the bearing housing 13. Then, after the restricting pin 63 is inserted into the pin hole base end side 23a and the pin hole tip side 61b, both end parts of the restricting pin 63 are bent slightly outside the outer peripheral surface 13a to form bent portions 63a and 63a. The bent portions 63a and 63a function as come-off prevention for preventing the restricting pin 63 from coming off.

### (Sixth Embodiment)

As illustrated in FIG. 8(b), a radial foil bearing 56 according to a sixth embodiment includes a bolt 65 functioning as a restricting pin instead of the restricting pin 63 in the fifth embodiment. Then, instead of the bent portions 63a and 63a, a nut 66 is screwed into the tip part of the bolt 65 outside the outer peripheral surface 13a. In addition, on the outer peripheral surface 13a, bearing surfaces 67 to which a head 65a of the bolt 65 and the nut 66 are each fixed are provided. Such fastening of the bolt 65 and the nut 66 realizes come-off prevention of the bolt 65 serving as a restricting pin. That is, the head 65a of the bolt 65 and the nut 66 function as come-off prevention portions that restrict displacement of the bolt 65 in the come-off direction.

### (Seventh Embodiment)

As illustrated in FIG. 8(c), a radial foil bearing 57 according to a seventh embodiment includes a bearing foil 69 instead of the bearing foil 19 in the first embodiment. The end parts 19a and 19b of the bearing foil 19 engage and intersect with each other in the groove 21, whereas circumferential end parts 69a and 69b of the bearing foil 69 are bent toward the radially outer side in the groove 21 and do not intersect with each other as viewed in the axial direction.

### (Eighth Embodiment)

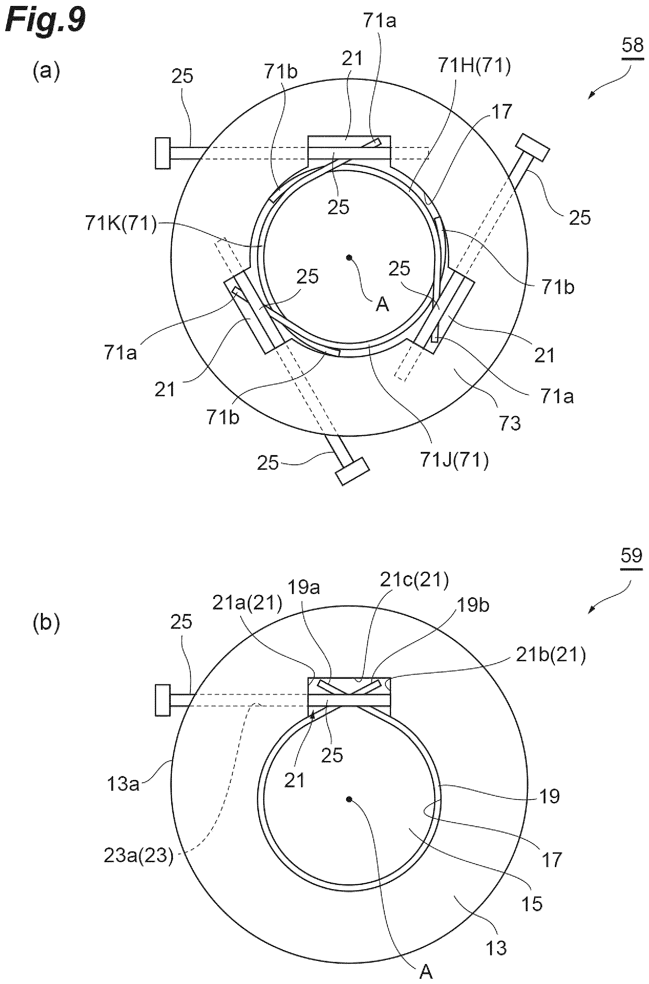

As illustrated in FIG. 9(a), a radial foil bearing 58 according to an eighth embodiment includes a bearing foil 71 instead of the bearing foil 19. The bearing foil 71 includes three bearing foils 71H, 71J, and 71K having substantially equal circumferential dimensions and connected in the circumferential direction, and surrounds the rotation axis 5 (see FIG. 1). The circumferential connection structure among the bearing foils 71H, 71J, and 71K is similar to, for example, the connection structure by concave and convex engagement between the end parts 19a and 19b as illustrated in FIG. 4(b). Each of the bearing foils 71H, 71J, and 71K includes the top foil 20a, the intermediate foil 20b, and the back foil 20c, similarly to the bearing foil 19 (see FIG. 3). In a bearing housing 73, three grooves 21 are formed at equal intervals in the circumferential direction. One circumferential end part 71a of each of the bearing foils 71H, 71J, and 71K is inserted into the groove 21, and the other circumferential end part 71b is located on the inner peripheral surface 17 of the insertion hole 15 without being inserted into the groove 21. Then, the circumferential end part 71a inserted into the groove 21 is axially sandwiched between the two restricting pins 25 arranged in the depth direction of the drawing. As viewed in the extending direction (axial direction) of the groove 21, the restricting pin 25 and the circumferential end part 71a overlap each other in the groove 21.

### (Ninth Embodiment)

As illustrated in FIG. 9(b), in a radial foil bearing 59 according to a ninth embodiment, the pin hole tip side 23b (see FIG. 2(a)) in the first embodiment is omitted, and the tip of the restricting pin 25 abuts on and is in contact with the groove side surface 21b. In this case, in order to fix the restricting pin 25, a female screw portion may be provided on the pin hole base end side 23a, and a male screw portion of the restricting pin 25 may be screwed into the female screw portion.

The present disclosure can be implemented in various forms with various modifications and improvements based on the knowledge of those skilled in the art, including the embodiments described above. It is also possible to configure following modifications using the technical matters described in the embodiments described above. The configurations of the embodiments, the modifications and the like may be appropriately combined and used.

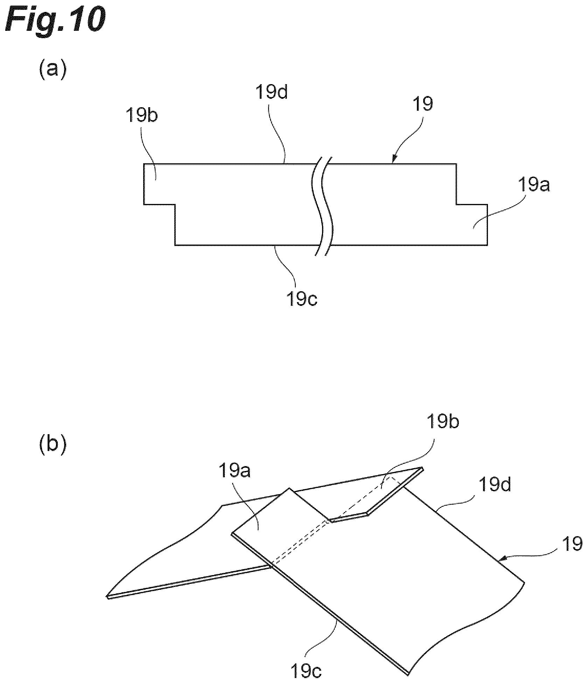

For example, the concave and convex engagement between the end parts 19a and 19b of the bearing foil 19 is not limited to the structure of FIG. 4(b) or the like, and various structures may be employed. For example, the bearing foil 19 may have the development shape illustrated in FIG 10(a), and the concave and convex engagement between the end part 19a and 19b may be of the structure in FIG 10(b). In addition, in each embodiment, the target of the regulation of the axial displacement by the restricting pins 25, 63, and 65 is the bearing foil 19 formed by overlapping three foils (top foil 20a, intermediate foil 20b, and back foil 20c). However, in the present disclosure, at least the top foil 20a of the three foils is only required to be the target of the regulation of the axial displacement by the restricting pins 25, 63, and 65. In addition, in any of the above-described embodiments, the groove 21 extends to both axial end surfaces of the housing, but the groove 21 may have a bottom on one axial side. That is, one axial side of the groove 21 may not reach the axial end surface of the housing. In this case, one restricting pin 25 may be provided for the groove.

### Reference Signs List

- 1, 52, 53, 54, 55, 56, 57, 58, 59: Radial foil bearing
- 5: Rotation axis
- 13: Bearing housing
- 13a: Outer peripheral surface
- 13c: Both end surfaces
- 13d: Both end surfaces
- 15: Insertion hole
- 17: Inner peripheral surface
- 19: Bearing foil
- 19a: End part
- 19b: End part
- 20a: Top foil
- 21: Groove
- 21a: Groove side surface (inner side surface)
- 21b: Groove side surface (inner side surface)
- 21c: Groove bottom surface (inner side surface)
- 23: Pin hole
- 25, 63, 65: Restricting pin
- 23a: Pin hole base end side (through hole)
- 23b: Pin hole tip side
- 63a: Bent portion (come-off prevention portion)
- 65a: Head (come-off prevention portion)
- 66: Nut (come-off prevention portion)
- 69: Bearing foil
- 71H: Bearing foil
- 71J: Bearing foil
- 71K: Bearing foil
- 71a: Circumferential end part
- 73: Bearing housing

## Claims

1. A radial foil bearing surrounding a rotation axis and supporting the rotation axis, comprising:
a bearing housing;
an insertion hole formed in the bearing housing and through which the rotation axis is inserted;
a groove provided in an inner peripheral surface of the insertion hole;
a through hole having an opening formed in the groove and extending to an outer peripheral surface of the bearing housing;
a restricting pin inserted into the through hole and also extending into the groove; and
a top foil disposed in the insertion hole, wherein
the groove is formed so as to reach an axial end surface of the bearing housing,
a circumferential end part of the top foil is disposed in the groove, and
the restricting pin intersects or contacts with an inner side surface of the groove at multiple locations.

2. The radial foil bearing according to claim 1, wherein a pair of the restricting pins are disposed so as to sandwich the end part of the top foil in an extending direction of the groove.

3. The radial foil bearing according to claim 1, wherein
the restricting pin passes through a hole provided at the end part of the top foil in the groove, and
the top foil is installed in a state where displacement corresponding to a dimensional difference between the restricting pin and the hole is possible.

4. The radial foil bearing according to any one of claims 1 to 3, wherein one end of the restricting pin is screwed into a female screw hole provided in the inner side surface of the groove.

5. The radial foil bearing according to any one of claims 1 to 3, wherein the restricting pin passes through the groove and extends so that both ends thereof protrude to outside of the bearing housing, and the both ends of the restricting pin are provided with come-off prevention portions that restrict displacement of come-off direction from the bearing housing.

6. The radial foil bearing according to any one of claims 1 to 3, wherein the restricting pin and the end part of the top foil overlap as viewed in an extending direction of the groove.
